# EUROPEAN PATENT APPLICATION

(11) **EP 4 119 985 A1**
(43) Date of publication of application: **18.01.2023**
(21) Application number: 21781877.2
(22) Date of filing: 17.03.2021
(51) Int. Cl.: G01S 19/00

(54) **INTERFERENCE SUPPRESSION METHOD AND DETECTION DEVICE**

(30) Priority: 30.03.2020 CN 202010233900
(71) Applicant: HUAWEI TECHNOLOGIES CO., LTD., Shenzhen, Guangdong 518129 (CN)
(72) Inventor: XU, Leilei, Shenzhen, Guangdong 518129 (CN); QIN, Boya, Shenzhen, Guangdong 518129 (CN)
(74) Representative: Maiwald GmbH
(86) International application number: PCT/CN2021/081227
(87) International publication number: WO 2021/197065

(57) **Abstract**

An interference suppression method and a detection apparatus are provided. A radar determines a group of optimized phases of a transmit signal at a transmit end, and modulates an initial phase of the transmit signal into an optimized phase. The optimized phase is different from an initial phase of an interference signal, so that the interference signal cannot be accumulated when the radar performs coherent accumulation on an echo signal of the transmit signal at a receive end. This can suppress a ghost target caused by synchronization between the radar transmit signal and the interference signal.

## Description

This application claims priority to Chinese Patent Application No. 202010233900.6, filed with the China National Intellectual Property Administration on March 30, 2020 and entitled "INTERFERENCE SUPPRESSION METHOD AND DETECTION APPARATUS", which is incorporated herein by reference in its entirety.

### TECHNICAL FIELD

This application relates to the field of autonomous driving, and specifically, to an interference suppression method and a detection apparatus.

### BACKGROUND

With continuous improvement of automobile safety standards, a vehicle-mounted advanced driver assistance system (advanced driver assistance systems, ADAS) emerges on the market. A vehicle-mounted millimeter-wave radar is a standard configuration and primary sensor of a vehicle-mounted sensor system. According to a survey, there are more than 200 million new users of vehicle-mounted millimeter-wave radars every year, and most of 24 GHz and 76 to 81 GHz spectrums are occupied. An increase of vehicle radars leads to an increased probability of mutual interference between radars. This greatly reduces a radar detection probability or increases a false alarm probability, resulting in a non-negligible impact on safety or comfort of a vehicle. In addition, a standardization and collaboration organization for vehicle-mounted radars has not been established, and waveforms of radars of different vehicles are not coordinated. This may cause a formation of a ghost target or a stronger interference signal strength.

A continuous phase coded signal (phase modulation continuous wave, PMCW) can provide high anti-interference robustness, fine range resolution, and good autocorrelation and cross-correlation characteristics, which can be applied to a multiple-input multiple-output (multiple input multiple output, MIMO) radar system. Therefore, a PMCW waveform is considered as one of important development directions of next-generation radars.

Currently, a conventional PMCW anti-interference method is mainly implemented by changing a parameter of a transmitted PMCW waveform after an interference signal is detected, and there is no scenario in which a PMCW waveform transmitted by a radar is synchronized with an interference waveform in the conventional method. When the transmitted PMCW waveform is synchronized with the interference waveform, a strong ghost target (ghost targets) appears in a range-Doppler response diagram after subsequent signal processing. That is, there is no target at a specific position, but it is determined that there is a target after some methods are used. In this case, an amplitude of the ghost target is much higher than that of a real target. This phenomenon greatly affects performance of a radar system.

### SUMMARY

This application provides an interference suppression method and a detection apparatus, to suppress a ghost target caused by synchronization between a radar transmit waveform and an interference signal.

According to a first aspect, an interference suppression method is provided. The method includes: determining an optimized phase of a first transmit signal, and modulating an initial phase of the first transmit signal to the optimized phase, where the optimized phase is different from an initial phase of an interference signal; transmitting the first transmit signal obtained after phase modulation; receiving an echo signal of the first transmit signal obtained after phase modulation, where the echo signal includes the interference signal; and filtering the echo signal based on the first transmit signal obtained after phase modulation.

In the foregoing technical solution, a radar device optimizes an initial phase of a transmit signal at a transmit end, so that the initial phase of the interference signal is different from the initial phase of the transmit signal, and therefore the interference signal cannot be accumulated when the radar performs coherent accumulation on an echo signal of the transmit signal at a receive end. This can suppress a ghost target caused by synchronization between the radar transmit signal and the interference signal.

With reference to the first aspect, in some implementations of the first aspect, the determining an optimized phase of a first transmit signal specifically includes: determining a quantity M of transmit waveforms in the first transmit signal, where M is greater than or equal to 1, and M is an integer; and determining a group of optimized phases that one-to-one correspond to the M transmit waveforms; and the modulating an initial phase of the first transmit signal to the optimized phase specifically includes: modulating initial phases of the M transmit waveforms in the first transmit signal to corresponding optimized phases.

In the foregoing technical solution, the radar device optimizes the initial phase of the transmit signal at the transmit end, so that the initial phase of the interference signal is different from the initial phase of the transmit signal, and therefore the interference signal cannot be accumulated when the radar performs coherent accumulation on the echo signal of the transmit signal at the receive end. This can suppress the ghost target caused by synchronization between the radar transmit signal and the interference signal.

With reference to the first aspect, in some implementations of the first aspect, the determining a group of optimized phases that one-to-one correspond to the M transmit waveforms includes: performing coherent accumulation on the filtered echo signal to obtain a range-Doppler response diagram; determining, based on the range-Doppler response diagram, that there is a ghost target, and obtaining, along a slow time dimension, phase information in a distance unit in which the ghost target is located, where the phase information is denoted as a vector w_{I}; performing signal processing on the echo signal based on w_{I} to obtain an amplitude expression |W^{H}w_{I}|, where W is a discrete Fourier transform matrix, and (·)^{H} is a conjugate transpose operation of the matrix; calculating a minimum value of the amplitude expression |W^{H}w_{I}|; and determining, based on the minimum value, the group of optimized phases that one-to-one correspond to the M transmit waveforms.

In the foregoing technical solution, the amplitude expression |W^{H}w_{I}| is obtained by performing signal processing on the ghost target generated in the echo signal, the minimum value of the amplitude expression is calculated to determine a local optimal optimized phase, and the initial phase of the transmit signal is remodulated based on the local optimal optimized phase. Generally, the ghost target can be completely suppressed in a subsequent echo signal.

With reference to the first aspect, in some implementations of the first aspect, the determining a group of optimized phases that one-to-one correspond to the M transmit waveforms includes: randomly generating a group of optimized phases that one-to-one correspond to the M transmit waveforms.

In the foregoing technical solution, the transmit end may randomly generate the group of optimized phases without detecting whether there is the ghost target, so that the ghost target can be actively suppressed at the transmit end.

With reference to the first aspect, in some implementations of the first aspect, the first transmit signal and the interference signal each are a continuous phase coded signal PMCW.

With reference to the first aspect, in some implementations of the first aspect, the first transmit signal and the interference signal have a same waveform and a same initial phase.

According to a second aspect, a detection apparatus is provided. The detection apparatus is configured to perform the method in any one of the first aspect and the possible implementations of the first aspect. Specifically, the detection apparatus may include a module configured to perform the method in any one of the first aspect or the possible implementations of the first aspect, for example, include a processing module and a transceiver module. For example, the detection apparatus is a radar detection apparatus. The transceiver module may be a function module, and the function module can complete both an information receiving function and an information sending function. Alternatively, the transceiver module may be a collective name of a sending module and a receiving module. The sending module is configured to complete the information sending function, and the receiving module is configured to complete the information receiving function.

For technical effects brought by the second aspect or the possible implementations of the second aspect, refer to the descriptions of the technical effects of the first aspect or the implementations of the first aspect. Details are not described again.

According to a third aspect, this application provides a detection apparatus, including an interface circuit and a processor. The interface circuit is configured to receive computer code or instructions, and transmit the computer code or the instructions to the processor. The processor runs the computer code or the instructions, so that the method in any one of the first aspect or the implementations of the first aspect is implemented.

According to a fourth aspect, this application provides a detection device, including at least one processor. The at least one processor is coupled to at least one memory. The at least one memory is configured to store a computer program or instructions. The at least one processor is configured to invoke the computer program or the instructions from the at least one memory and run the computer program or the instructions, so that the detection device performs the method in any one of the first aspect or the possible implementations of the first aspect.

According to a fifth aspect, this application provides a detection device, including at least one processor, at least one memory, and at least one transceiver. The at least one memory is configured to store a computer program or instructions, and the at least one processor is configured to invoke the computer program or the instructions from the at least one memory and run the computer program or the instructions, and control the transceiver to receive and send a signal, so that the detection apparatus performs the method in any one of the first aspect or the possible implementation of the first aspect.

According to a sixth aspect, a computer program product is provided. The computer program product includes a computer program (which may also be referred to as code or instructions). When the computer program is run, the method in any one of the first aspect or the possible implementation of the first aspect is implemented.

According to a seventh aspect, a computer-readable storage medium is provided. The computer-readable storage medium stores a computer program (which may also be referred to as code or instructions). When the computer program is run on a computer, the method in any one of the first aspect or the possible implementation of the first aspect is implemented.

According to an eighth aspect, a radar detection system is provided, including the foregoing radar detection device.

According to a ninth aspect, a vehicle is provided, for example, an intelligent vehicle, including the detection apparatus according to the second aspect.

### BRIEF DESCRIPTION OF DRAWINGS

FIG. 1 is a schematic diagram of a possible application scenario applicable to an embodiment of this application;
FIG. 2 is a schematic block diagram of a conventional PMCW anti-interference method;
FIG. 3 is a schematic flowchart of interference suppression according to an embodiment of this application;
FIG. 4 is a schematic block diagram of optimizing an initial phase when there is a ghost target;
FIG. 5 is a schematic block diagram of interference suppression according to an embodiment of this application;
FIG. 6 is a schematic block diagram of a detection apparatus according to an embodiment of this application;
FIG. 7 is a schematic block diagram of another detection apparatus according to an embodiment of this application; and
FIG. 8 is a schematic block diagram of a radar detection apparatus according to an embodiment of this application.

### DESCRIPTION OF EMBODIMENTS

The following describes technical solutions of this application with reference to accompanying drawings.

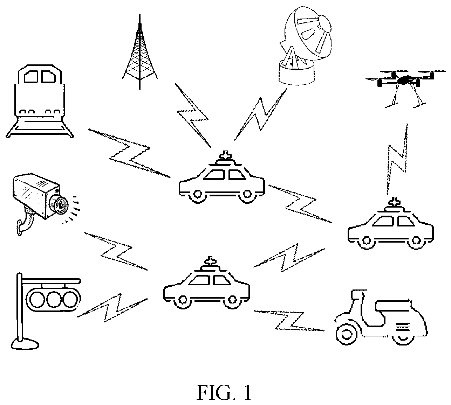

FIG. 1 is a schematic diagram of a possible application scenario according to an embodiment of this application. A system in the application scenario includes one or more radar apparatuses, and a target apparatus for interaction between the radar apparatuses. This application is mainly applied to a vehicle-mounted radar system. This application may also be applied to another radar system provided that mutual interference between radar signals exists in the system.

A radar (Radar) is an electronic device that detects a target by using an electromagnetic wave, or referred to as a radar apparatus, or referred to as a detector or a detection apparatus. A working principle of the radar is as follows: The radar transmits an electromagnetic wave (which may also be referred to as a transmit signal or a detection signal) by using a transmitter device to illuminate a target. A radar receiver device receives a reflected signal reflected by the target object, and displays an echo signal of the target on a radar display, to obtain information such as a distance from the target to a transmitting point of the electromagnetic wave, a distance change rate (a radial velocity), an azimuth, and a height.

As shown in FIG. 1, a radar may be installed on a motor vehicle, an uncrewed aerial vehicle, a railcar, a bicycle, a signal light, a speed measurement apparatus, a network device (such as a base station or a terminal device in various systems), or the like. This application is applicable to not only a radar system between vehicles, but also a radar system between a vehicle and another apparatus such as an uncrewed aerial vehicle, or a radar system between other apparatus. An installation position and a function of the radar are not limited in this application.

To facilitate understanding of embodiments of this application, the following first briefly describes terms used in this application.
1. Fast time dimension: For a periodic pulse sequence transmitted by a pulse radar, a received echo of each pulse sequence is stored by row. For example, a received echo of a first pulse is placed in a first row, a received echo of a second pulse is placed in a second row, and so on. Such a storage method provides a good basic model for understanding a signal processing process. Therefore, a dimension in a direction of the row (that is, inside a waveform) is defined as a fast time dimension.
2. Slow time dimension: For a periodic pulse sequence transmitted by a pulse radar, a received echo of each pulse sequence is stored by row. For example, a received echo of a first pulse is placed in a first row, a received echo of a second pulse is placed in a second row, and so on. A dimension in a direction of a column (that is, between waveforms) is defined as a slow time dimension.
3. Fast Fourier transform (fast Fourier transform, FFT): a method for quickly calculating a discrete Fourier transform (discrete Fourier transform, DFT) of a sequence or an inverse transform of the sequence. Fourier analysis converts a signal from an original domain (often time or space) to a representation in a frequency domain, or reversely.
4. Distance unit: After matched filtering or frequency mixing processing is performed on an echo signal, each sampling point is a distance unit. A distance unit of a radar corresponds to a resolution distance of the radar. The distance is continuous, and the distance unit is discrete.
5. Coherent accumulation: Coherent accumulation is performed before an envelope detector. Based on a phase relationship between received pulses, amplitude superposition of signals can be directly obtained. Coherent accumulation can directly add all radar echo energy.

Currently, a conventional PMCW anti-interference method mainly performs interference avoidance by changing a parameter of a transmit waveform after an interference signal is detected, and mainly includes: changing a length of a PMCW, changing a transmit rate of a PMCW code element, changing a sequence type of the PMCW, frequency hopping, selecting a frequency with less interference, transmitting an orthogonal waveform, modulating a Hadamard code (Hadamard code), and the like.

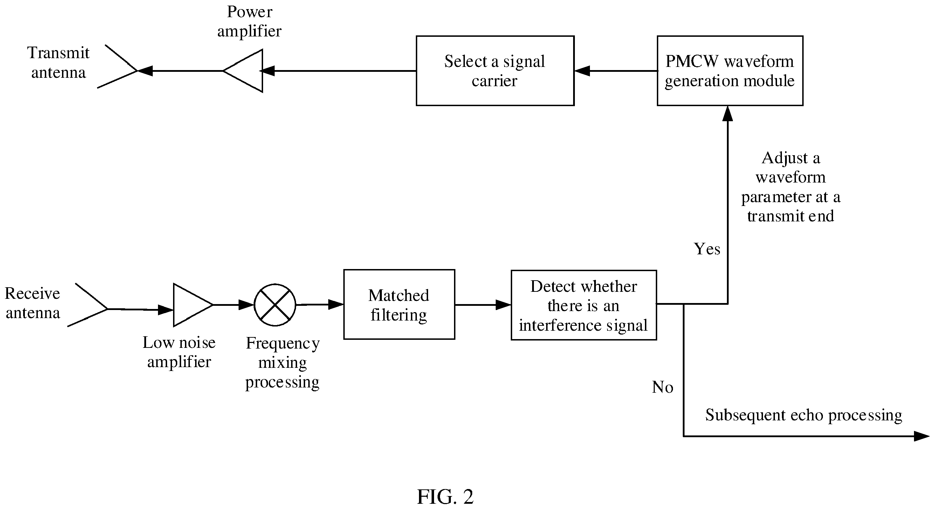

FIG. 2 is a schematic block diagram of a conventional PMCW anti-interference method. In the PMCW anti-interference method, a waveform parameter is adjusted at a transmit end after an interference signal is detected. Detailed procedures are as follows.
(1) A receive antenna receives a reflected signal and an interference signal. The reflected signal and the interference signal pass through a filter together. An echo signal formed by the reflected signal and the interference signal is displayed on a radar display.
(2) A frequency mixing processing module performs frequency mixing on the echo signal by using a transmit signal
(3) An interference detection module (for example, a method of collecting statistics on noise floor) detects whether there is an interference signal in the echo signal. If it is determined that there is interference, a parameter of the transmit waveform is adjusted at the transmit end. For example, adjustment of the parameter includes the following methods.

Method 1: Change a length of a PMCW, a transmit rate of the PMCW code element, and a sequence type of the PMCW.
Method 2: Perform random frequency hopping and select a frequency with less interference. This method uses samples to estimate frequencies with less interference.
Method 3: Transmit an orthogonal waveform. In this method, a large quantity of different filters at a back end are required to estimate parameters of the interference signal. Alternatively, modulate a Hadamard code. In this method, the Hadamard code modulated by the interference signal needs to be accurately estimated so that a Hadamard code orthogonal to the Hadamard code can be modulated at the transmit end.

A scenario in which a PMCW waveform transmitted by a radar is synchronized with an interference waveform is not considered in the conventional PMCW anti-interference method. When the transmitted PMCW waveform and the interference waveform are the same and synchronized, a strong ghost target appears in a range-Doppler response diagram after subsequent signal processing. This phenomenon greatly affects performance of the radar system.

It should be understood that, when the transmit waveform of an interference source is stable (that is, does not change in a short time), the foregoing anti-interference method can suppress the ghost target to some extent, but the noise floor is still increased. In addition, a prerequisite for using the foregoing method is that the ghost target is detected and it is determined that the ghost target is generated by the interference signal. Especially, when the orthogonal waveform is transmitted or the Hadamard code is modulated, the parameter of the interference signal needs to be accurately estimated, and an actual operation difficulty coefficient is high, a large quantity of samples or some prior information is required to detect interference and identify interference as the ghost target. Especially in a multi-target scenario, the difficulty is further increased. In addition, if Hadamard code modulation is used, a maximum unambiguous speed is lost, and a degree of freedom in a slow time dimension is not fully utilized.

In addition, in the foregoing methods, adjustment is performed at the transmit end after the interference signal is detected, and active avoidance or interference suppression is not implemented at the transmit end.

In view of this, this application provides an interference suppression method. In a scenario in which the transmit signal and the interference signal are the same and synchronized, the strong ghost target is actively suppressed at the transmit end by using the degree of freedom in the slow time dimension. It should be understood that the transmit signal and the interference signal are the same means that waveforms of the transmit signal and the interference signal are the same, initial phases are the same, and amplitudes may be the same or different. In addition, in a scenario in which the transmit signal and the interference signal are different but synchronized (that is, side lobes in a same distance unit are the same or periodic), the method provided in this application may also suppress the noise floor in this type of scenario.

The following describes in detail embodiments provided in this application with reference to the accompanying drawings.

By way of example, and not limitation, the following embodiments are described based on a single-transmit and single-receive radar system. Both a transmit signal and an interference signal are PMCWs, and the transmit signal and the interference signal are the same and synchronized to form a strong ghost target. The following embodiments are also applicable to a multi-station radar system, for example, a MIMO system. When PMCWs transmitted by antenna array elements in the multi-station radar system are different, a plurality of ghost targets may be suppressed at the same time by using the method provided in this application.

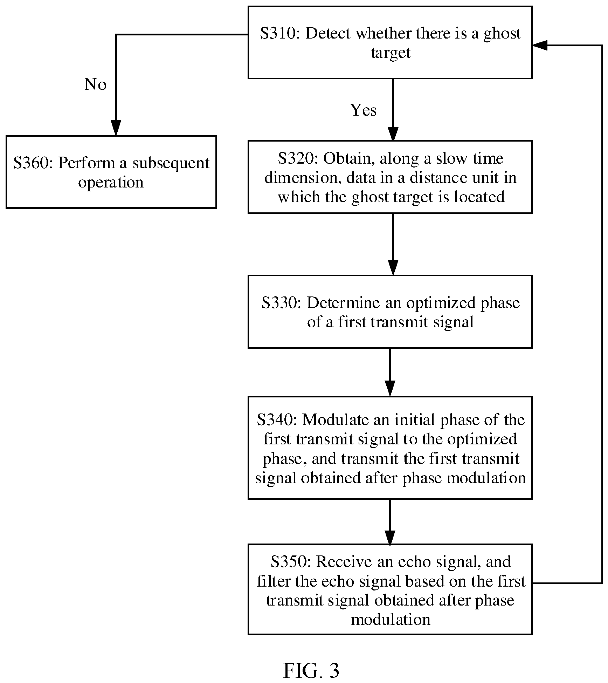

FIG. 3 is a schematic flowchart of interference suppression according to an embodiment of this application. The method may include the following steps.

S310: Detect whether there is a ghost target.

A radar detection device transmits a second transmit signal, and receives an echo signal of the second transmit signal after a period of time, where the echo signal performs matched filtering after frequency mixing; then performs coherent accumulation on the echo signal of the second transmit signal to obtain a range-Doppler response diagram; and determines, based on the range-Doppler response diagram, whether there is the ghost target, that is, a false target.

A method that the radar detection device determines whether there is the ghost target includes: If a distance between ghost targets is half of a distance between real targets, it may be temporarily considered that there is the ghost target. If the phenomenon does not exist after an initial phase of a transmit signal is changed subsequently, it may be determined that there is the ghost target.

If there is no ghost target, go to step S360.

If there is the ghost target, go to step S320.

S320: Obtain, along a slow time dimension, data in a distance unit in which the ghost target is located.

When the radar detection device detects the ghost target in the echo signal, a value of phase information that is in the distance unit in which the ghost target is located and that is obtained along the slow time dimension is denoted as a vector w_{I}. Go to step S330.

S330: Determine an optimized phase of a first transmit signal

When determining, based on the echo signal of the second transmit signal, that there is the ghost target, the radar detection device adjusts an initial phase of the to-be-transmitted first transmit signal.

The radar detection device determines a quantity M of transmit waveforms in the first transmit signal, where M is greater than or equal to 1 and M is an integer, and determines a group of (that is, M) optimized phases that one-to-one correspond to the M transmit waveforms. For example, when the first transmit signal includes one PMCW waveform, the radar detection device needs to correspondingly determine one optimized phase corresponding to the one PMCW waveform in the first transmit signal; or when the first transmit signal includes two PMCW waveforms, the radar detection device needs to correspondingly determine two optimized phases that one-to-one correspond to the two PMCW waveforms in the first transmit signal; or when the first transmit signal includes five PMCW waveforms, the radar detection device needs to correspondingly determine five optimized phases that one-to-one correspond to the five PMCW waveforms in the first transmit signal. In this case, it is considered by default that an interference signal has no modulated initial phase, that is, the foregoing determined group of optimized phases is different from the initial phase of the interference signal.

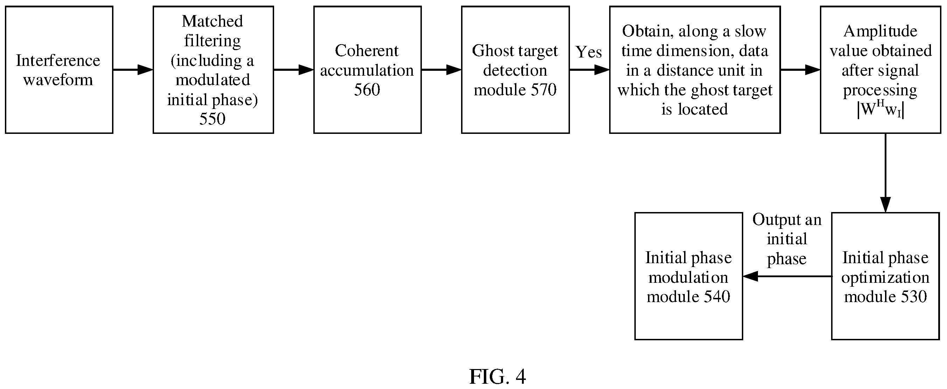

FIG. 4 is a schematic block diagram of optimizing an initial phase when there is a ghost target.

When a PMCW waveform transmitted by a radar and an interference signal is the same and synchronized to form a strong ghost target, an interference waveform in an echo signal may be considered as the PMCW waveform transmitted by the radar (that is, a second transmit signal), and the ghost target appears after a matched filter. Perform signal processing (performing an FFT operation along a slow time dimension) on the echo signal of the second transmit signal based on a vector w_{I} to obtain an amplitude value expression |W^{H}w_{I}|, where W is a discrete Fourier transform matrix, and (·)^{^H} is a conjugate transpose operation of the matrix. In order to better suppress the ghost target, the amplitude value obtained after signal processing needs to be as small as possible. Therefore, an optimized phase of a first transmit signal needs to be determined based on a minimum value of the amplitude value of the echo signal Because the optimization problem is a non-convex optimization problem, (it should be understood that, when the value of |W^{H}w_{I}| is as small as possible, the determined optimized phase of the first transmit signal is a local optimal phase), conditions such as an initial value and an optimization algorithm may generate different optimization results. This further reduces a probability that a modulated initial phase of the PMCW transmitted by an interference source is the same as that of the PMCW transmitted by the radar, and basically eliminates a possibility that a same waveform generates a ghost target. By way of example, and not limitation, a method for calculating the optimal phase is not specifically limited in this application.

Optionally, if a hardware condition and an optimization algorithm permit, a group of optimized phases for the first transmit signal may be determined online.

Optionally, if the hardware condition and the optimization algorithm do not permit, a group of optimized phases may also be randomly generated to modulate an initial phase of the first transmit signal.

It should be understood that in this application, a group of optimized phases may be directly randomly generated at a transmit end to modulate the transmit signal without detecting whether there is the ghost target, to actively suppress the ghost target.

A radar detection device stores the determined set of optimized phases, and performs step S340.

S340: Modulate the initial phase of the first transmit signal to the optimized phase, and transmit the first transmit signal obtained after phase modulation.

The radar detection device sequentially modulates initial phases of M PMCW waveforms in the first transmit signal based on the stored group of optimized phases, then after a carrier is modulated and signal power amplification is performed, transmits the first transmit signal obtained after phase modulation, and performs step S350.

S350: Receive the echo signal, and filter the echo signal based on the first transmit signal obtained after phase modulation.

The radar detection device receives the echo signal of the first transmit signal. After frequency mixing processing is performed on the echo signal, the echo signal is filtered by using a waveform of the first transmit signal that includes the modulated phase, and then coherent accumulation is performed on the echo signal of the first transmit signal to obtain a range-Doppler response diagram. Step S310 is performed.

It should be understood that, when there is still the ghost target after the phase of the first transmit signal is modulated, a value of phase information in a distance unit in which the ghost target is located is also obtained along the slow time dimension. However, because the data includes a phase (that is, the optimized phase) modulated by the waveform of the first transmit signal, the modulated phase needs to perform dot product to obtain data without the initial phase, which is denoted as the vector w_{I}.

It should be understood that, modulating the initial phase of the first transmit signal to the optimized phase determined in S330 is to ensure that after matched filtering is performed on the echo signal by using the waveform of the first transmit signal that includes the modulated phase, because an initial phase of the interference signal in the echo signal is different from that of the first transmit signal obtained after phase modulation, the interference signal cannot be accumulated during coherent accumulation (the fast Fourier transform (fast Fourier transform, FFT) operation along the slow time dimension). After the foregoing operations are performed, a probability that there is the ghost target is extremely low, and the probability is almost 0. In this application, to close all possibilities, a case in which there is still the ghost target is also considered herein.

It should be understood that the initial phase of the first transmit signal is modulated by using the foregoing local optimal phase. Generally, the interference signal cannot be accumulated when coherent accumulation is performed at a receive end, and the ghost target can be almost completely suppressed.

It should be understood that when the first transmit signal is modulated by using the randomly generated group of phases, the ghost target can also be suppressed at the receive end.

S360: Perform a subsequent operation.

When the radar detection device does not detect the ghost target in the echo signal, subsequent signal processing, such as incoherent accumulation and parameter estimation, is performed.

In the foregoing technical solution, the radar detection device determines, at the transmit end, a group of optimized phases corresponding to a transmit signal, modulates an initial phase of each transmitted PMCW waveform (a fast time dimension) in transmit signals of a frame in the slow time dimension, and performs coherent accumulation after frequency mixing of echo signals and matched filtering. This can basically completely suppress the ghost target. Compared with a conventional method in which an avoidance or suppression operation is performed at the transmit end after the ghost target is detected, in this technical solution, the ghost target can be actively suppressed at the transmit end. The initial phase of each transmitted PMCW is optimized to ensure that ghost targets cannot be accumulated during coherent accumulation. Theoretically, the ghost target can be completely suppressed if optimization effect of the initial phase is good. The phase modulation is performed before the waveform is transmitted. At the receive end, the transmit waveform including the modulated phase is used for matched filtering. In this way, an echo of a real target is not affected, and the ghost target caused when the PMCW waveform transmitted by the radar and the interference signal is the same and synchronized can be actively suppressed. There is no need to perform adjustment on the transmit end after the ghost target is detected.

In addition, compared with Hadamard code or code division multiple access (code division multiple access, CDMA) code modulation, the modulated code in this technical solution is not periodic, and the echo signal is decoded by using a phase with modulation. This ensures that a maximum ambiguous speed is not lost. The modulated code in this technical solution is not limited by odd numbers or even numbers, and a quantity of modulated codes is not limited. This expands the application scope of this solution. A value range of each code modulated in this solution is not restricted. In this way, more degrees of freedom are brought, interference can be better suppressed, and a probability of covering a weak target is reduced.

In addition, the Hadamard code is staggered from the interference signal in a Doppler domain instead of being suppressed. When there are many interference sources, a real target signal basically overlaps with several interference signals in the Doppler domain. In this case, the real target and the interference cannot be separated. The code modulated in this technical solution suppresses the interference and is not limited by a quantity of interference sources. A value of the Hadamard code is disclosed and limited. As a result, the transmit signal and the interference signal may modulate a same type of code, and there is still a possibility of the ghost target. Because the code modulated in this solution is a constant modulus constraint and non-convex optimization problem, there are infinite possibilities, and a possibility that the ghost target is generated in a same waveform is basically eliminated, and the probability is almost 0. In this application, to close all possibilities, a case in which there is the ghost target is considered in FIG. 3.

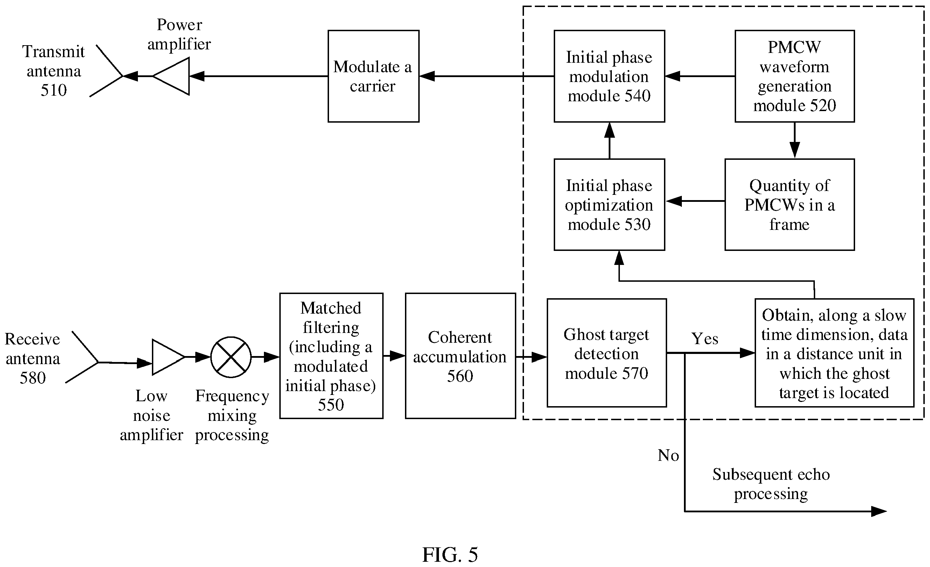

FIG. 5 is a schematic block diagram of interference suppression according to an embodiment of this application. An implementation procedure in FIG. 5 is completely the same as that in FIG. 3, and specific method steps are not described herein again. The following briefly describes functions of main modules in FIG. 5.

A transmit antenna 510 and a receive antenna 580 are devices configured to radiate and receive an electromagnetic wave and determine a detection direction of the electromagnetic wave. When transmitting, the radar must concentrate and radiate energy in a direction of illumination required. When receiving, the radar receives only an echo in the detection direction as far as possible. Among three coordinates (an azimuth, an elevation angle, and a distance) of a target position measured by the radar, measurement of two coordinates (the azimuth and the elevation angle) is directly related to performance of the antenna. Therefore, the performance of the antenna is more important for a radar device than for another electronic device (such as a communications device). For example, in S310, a second transmit signal is transmitted by using the transmit antenna 510, and an echo signal of the second transmit signal is received after a period of time.

A PMCW waveform generation module 520 is configured to design a PMCW offline based on a requirement of a scenario. If a hardware condition meets an online design requirement, the PMCW can be designed online.

An initial phase optimization module 530 is configured to determine a group of optimized phases after a transmitted PMCW sequence and a quantity of PMCWs in a frame are determined based on radar preselection. For example, in S330, after a quantity M of transmit waveforms in a first transmit signal is determined, the initial phase optimization module 530 determines a group of optimized phases that one-to-one correspond to the M transmit waveforms, and stores the group of optimized phases in an initial phase modulation module 540. Optionally, if a hardware condition and an optimization algorithm permit, a group of optimized phases for a transmit signal may be determined online. Optionally, if the hardware condition and the optimization algorithm do not permit, a group of optimized phases may also be randomly generated.

The initial phase modulation module 540 is configured to modulate an initial phase of each transmit PMCW based on the group of optimized phases by the initial phase optimization module 530. For example, in S340, the initial phase modulation module 540 modulates each waveform of M PMCW waveforms of the first transmit signal to a corresponding optimized phase based on the stored group of optimized phases.

Matched filtering module (including a modulated initial phase) 550: Because a modulated initial phase of each PMCW waveform (a fast time dimension) is different, in order not to affect a subsequent processing result of a real target, a matched filter of each PMCW waveform is a matched filter corresponding to each PMCW waveform including an optimized phase. For example, in S350, an echo signal is filtered by using the matched filtering 550 of the waveform that is of the first transmit signal and that includes the modulated phase. Coherent accumulation module 560: Coherent accumulation is performed before an envelope detector. Based on a phase relationship between received pulses, amplitude superposition of signals can be directly obtained. The coherent accumulation module can directly add all radar echo energy. For example, in S350, the coherent accumulation module 560 performs coherent accumulation on the echo signal of the first transmit signal filtered by the matched filtering 550, to obtain a range-Doppler response diagram.

A ghost target detection module 570 is configured to detect whether there is a ghost target based on the range-Doppler response diagram.

It may be understood that the methods and operations implemented by a radar detection device in the foregoing method embodiments may also be implemented by a component (for example, a chip or a circuit) that can be used in the radar detection device. In a possible implementation, the foregoing interference suppression method is implemented by a processor independent of a radar. The processor may be integrated inside or outside the radar apparatus. After a related parameter of an interference signal is determined by using the foregoing method, the related parameter is sent to the radar apparatus, so that the radar apparatus better performs interference avoidance during target detection. In another possible implementation, the foregoing interference signal estimation method is implemented by a fusion module. The fusion module may determine an interference signal parameter from at least one sensor, and may further comprehensively determine a parameter value of the interference signal. That is, the foregoing interference signal estimation method may be implemented with reference to a specific product form.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between a detection apparatus such as a radar and an interference signal or interaction between a detection apparatus and a target object. It may be understood that, to implement the foregoing functions, the detection apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

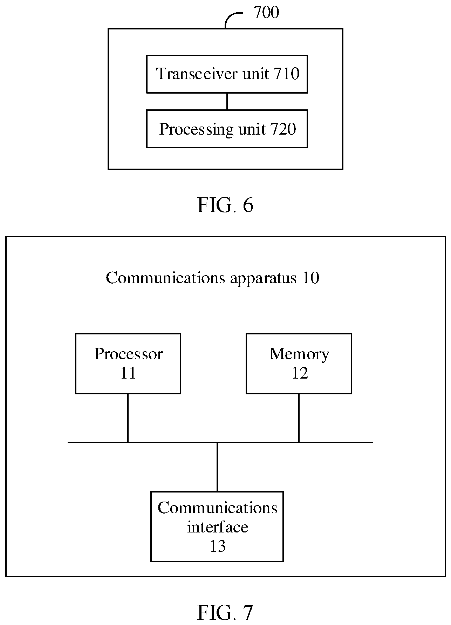

FIG. 6 is a schematic block diagram of a detection apparatus according to an embodiment of this application. The detection apparatus 700 includes a transceiver unit 710 and a processing unit 720. The transceiver unit 710 may communicate with the outside, and the processing unit 720 is configured to process data.

The processing unit 720 is configured to determine an optimized phase of a first transmit signal, and modulate an initial phase of the first transmit signal to the optimized phase. The optimized phase is different from an initial phase of an interference signal. The transceiver unit 710 is configured to transmit the first transmit signal obtained after phase modulation. The transceiver unit 710 is further configured to receive an echo signal of the first transmit signal obtained after phase modulation. The echo signal includes the interference signal. The processing unit 720 is further configured to filter the echo signal based on the first transmit signal obtained after phase modulation.

Optionally, the processing unit 720 is specifically configured to: determine a quantity M of transmit waveforms in the first transmit signal, where M is greater than or equal to 1, and M is an integer; determine a group of optimized phases that one-to-one correspond to the M transmit waveforms; and modulate initial phases of the M transmit waveforms in the first transmit signal to corresponding optimized phases.

Optionally, the processing unit 720 is specifically configured to: perform coherent accumulation on the filtered echo signal to obtain a range-Doppler response diagram; determine, based on the range-Doppler response diagram, that there is a ghost target, and obtain, along a slow time dimension, phase information in a distance unit in which the ghost target is located, where the phase information is denoted as a vector w_{I}; perform signal processing on the echo signal based on w_{I} to obtain an amplitude expression |W^{H}w_{I}|, where W is a discrete Fourier transform matrix, and (·)^{H} is a conjugate transpose operation of the matrix; calculate a minimum value of the amplitude expression |W^{H}w_{I}|; and determine, based on the minimum value, the group of optimized phases that one-to-one correspond to the M transmit waveforms.

Optionally, the processing unit 720 is specifically configured to randomly generate a group of optimized phases that one-to-one correspond to the M transmit waveforms.

Optionally, the first transmit signal and the interference signal each are a phase modulation continuous wave PMCW.

Optionally, the first transmit signal and the interference signal have a same waveform and a same initial phase.

Optionally, the transceiver unit 710 may be replaced with a sending unit or a receiving unit. For example, when performing a sending action, the transceiver unit 710 may be replaced with the sending unit. When performing a receiving action, the transceiver unit 710 may be replaced with the receiving unit.

Optionally, the transceiver unit 710 may include the transmit antenna 510 and the receive antenna 580 in FIG. 5. The processing unit 720 may include the PMCW waveform generation module 520, the initial phase optimization module 530, the initial phase modulation module 540, the matched filtering (including the modulated initial phase) 550, the coherent accumulation module 560, and the ghost target detection module 570 in FIG. 5.

In an implementation, the detection apparatus 700 may be the radar apparatus in the method embodiment. In this implementation, the processing unit 720 may be a processor. The transceiver unit 710 may be a transceiver. The transceiver may specifically include a receiver device and a transmitter device. The receiver device is configured to perform a receiving function, and the transmitter device is configured to perform a transmitting function. The processing unit 1300 may be a processing apparatus.

In another implementation, the detection apparatus 700 may be a component installed in a radar detection device, for example, a chip or an integrated circuit in the radar device. In this implementation, the transceiver unit 710 may be a communications interface or an interface circuit. The processing unit 720 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the detection apparatus 700 performs operations and/or processing performed by the radar in the method embodiments. Optionally, the processing apparatus may include only the processor, and the memory configured to store the computer program is located outside the processing apparatus. The processor is connected to the memory through a circuit/wire to read and execute the computer program stored in the memory. For another example, the processing apparatus may be a chip or an integrated circuit.

FIG. 7 is a schematic diagram of a structure of a detection apparatus 10 according to this application. As shown in FIG. 7, a communications apparatus 10 includes one or more processors 11, one or more memories 12, and one or more communications interfaces 13. The processor 11 is configured to control the communications interface 13 to receive and send a signal. The memory 12 is configured to store a computer program. The processor 11 is configured to invoke the computer program from the memory 12 and run the computer program, so that procedures and/or operations performed by the radar detection device in the method embodiments of this application are performed.

For example, the processor 11 may have a function of the processing unit 720 shown in FIG. 6, and the communications interface 13 may have a function of the transceiver unit 710 shown in FIG. 6. Specifically, the processor 11 may be configured to perform processing or an operation performed inside the radar detection device in FIG. 3, and the communications interface 13 is configured to perform a receiving and sending action performed by the radar detection device in FIG. 3.

In an implementation, the communications apparatus 10 may be the radar detection device in the method embodiment. In this implementation, the communications interface 13 may be a transceiver. The transceiver may include a receiver and a transmitter.

Optionally, the processor 11 may be a baseband apparatus, and the communications interface 13 may be a radio frequency apparatus.

In another implementation, the communications apparatus 10 may be a chip installed in the radar detection device. In this implementation, the communications interface 13 may be an interface circuit or an input/output interface.

In an optional manner, a detection apparatus includes a transmit antenna and a receive antenna. The transmit antenna and the receive antenna may be independently disposed, or may be integrated and disposed as a transceiver antenna, to execute a corresponding transmit/receive function. Further, the detection apparatus further includes a frequency mixer and/or an oscillator. Further, the detection apparatus may further include a low-pass filter, a directional coupler, and/or the like. The transmit antenna supports transmission of a radio signal, and the receive antenna supports receiving of a radio signal and/or receiving of a reflected signal, to finally implement a detection function.

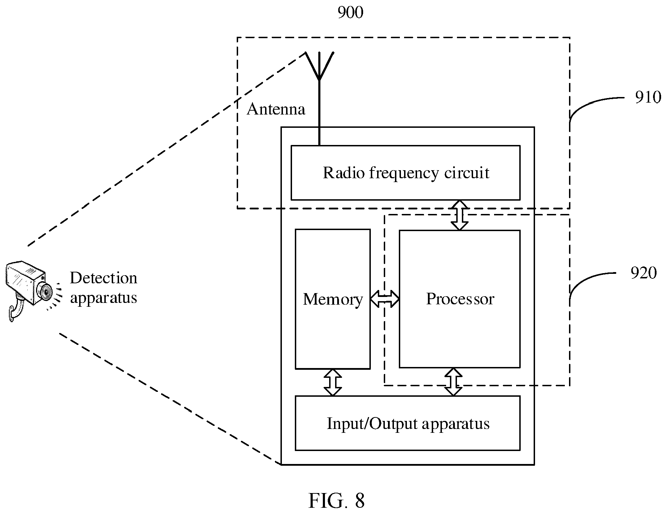

An embodiment of this application further provides a detection apparatus 900. The detection apparatus 900 may be a radar detection device or a chip. The detection apparatus 900 may be configured to perform operations performed by the radar detection device in the foregoing method embodiments. When the detection apparatus 900 is a radar detection device, FIG. 8 is a simplified schematic diagram of a structure of a detection apparatus. As shown in FIG. 8, the detection apparatus includes a processor, a memory, a radio frequency circuit, an antenna, and an input/output apparatus. The processor is mainly configured to process communications data, control the detection apparatus, execute a software program, process data of the software program, and the like. The memory is mainly configured to store a software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the radar detection device, the radio frequency circuit receives a radio frequency signal by using the antenna, converts the radio frequency signal into a baseband signal, and outputs the baseband signal to the processor. The processor converts the baseband signal into data and processes the data. For ease of description, FIG. 8 shows only one memory and one processor. In an actual radar detection product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the radar detection device, and the processor that has a processing function may be considered as a processing unit of the radar detection device.

As shown in FIG. 8, the radar detection device includes a transceiver unit 910 and a processing unit 920. The transceiver unit 910 may also be referred to as a transceiver, a transceiver machine, a transceiver apparatus, or the like. The processing unit 920 may also be referred to as a processor, a processing board, a processing module, a processing apparatus, or the like.

Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The transceiver unit sometimes may also be referred to as a transceiver machine, a transceiver, a transceiver circuit, or the like. The receiving unit sometimes may also be referred to as a receiver device, a receiver, a receive circuit, or the like. The sending unit sometimes may also be referred to as a transmitter device, a transmitter, a transmit circuit, or the like.

For example, in an implementation, the transceiver unit 910 is configured to perform a receiving operation of the radar detection device in FIG. 3. The processing unit 920 is configured to perform a processing action of the radar detection device in FIG. 3.

It should be understood that FIG. 8 is merely an example instead of a limitation, and the radar detection device including the transceiver unit and the processing unit may not depend on the structure shown in FIG. 8.

When the detection apparatus 900 is a chip, the chip includes a transceiver unit and a processing unit. The transceiver unit may be an input/output circuit or a communications interface. The processing unit may be a processor, a microprocessor, or an integrated circuit that is integrated on the chip.

Embodiments of this application further provide a computer-readable storage medium. The computer-readable storage medium stores computer instructions. When the computer instructions are run on a computer, operations and/or procedures performed by the radar detection device in the method embodiments of this application are performed.

An embodiment of this application further provides a computer program product. The computer program product includes computer program code or instructions. When the computer program code or the instructions are run on a computer, operations and/or procedures performed by radar detection in the method embodiments of this application are performed. An embodiment of this application further provides a radar system, configured to provide a detection function for a vehicle. The radar system includes at least one detection apparatus mentioned in the foregoing embodiments of this application. The at least one detection apparatus in the system may be integrated into an entire system or a device, or the at least one detection apparatus in the system may be independently disposed as an element or an apparatus.

An embodiment of this application further provides a detection system, configured to provide a detection function for a vehicle. The detection system includes at least one detection apparatus mentioned in the foregoing embodiments of this application, and at least one of a camera, a laser radar and other sensors. The at least one sensor apparatus in the system may be integrated into an entire system or a device, or the at least one sensor apparatus in the system may be independently disposed as an element or an apparatus. The detection system may be a device, and each apparatus is located in the device and serves as a function module of the device. Alternatively, the detection system may include a plurality of devices, and the detection apparatus, the sensor apparatus, and the like are separately located in different devices. For explanations and beneficial effects of related content in any detection apparatus provided above, refer to the corresponding method embodiments provided above. Details are not described herein again.

Further, any one of the foregoing systems may interact with a central controller of a vehicle to provide detection information for a decision or control of driving of the vehicle.

An embodiment of this application further provides a vehicle, for example, an intelligent vehicle. The vehicle includes at least one detection apparatus mentioned in the foregoing embodiments of this application or any one of the foregoing systems.

A specific structure of an execution body of the method provided in this embodiment of this application is not particularly limited in this embodiment of this application, provided that a program that records code of the method provided in this embodiment of this application can be run, to perform parameter estimation according to the method provided in this embodiment of this application. For example, the execution body of the method provided in this embodiment of this application may be a radar detection device or a function module capable of invoking a program and executing the program in the radar detection device.

Aspects or features of this application may be implemented as a method, an apparatus, or a product that uses standard programming and/or engineering technologies. As used herein, the term "product" may cover a computer program that is accessible from any computer-readable device, carrier, or medium. For example, a computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive).

Various storage media described in this specification may represent one or more devices and/or other machine-readable media that are configured to store information. The term "machine-readable media" may include but is not limited to a radio channel and various other media that can store, include, and/or carry instructions and/or data.

It should be understood that the processor mentioned in embodiments of this application may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include a plurality of forms in the following: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (a storage module) may be integrated into the processor.

It should be further noted that the memory described in this specification is intended to include, but is not limited to, these memories and any other memory of a suitable type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

It may be clearly understood by a person skilled in the art that, for ease of convenience and brevity, for a detailed working process of the foregoing apparatus, and unit, refer to a corresponding process in the foregoing method embodiments. Details are not described herein again.

In the several embodiments provided in this application, it should be understood that the disclosed apparatus and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or a part of the units may be selected based on actual requirements to achieve the objectives of the solutions of embodiments.

In addition, function units in embodiments of this application may be integrated into one unit, or each of the units may exist alone physically, or two or more units are integrated into one unit.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center that integrates one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interference suppression method, applied to a radar system, wherein the method comprises:
determining an optimized phase of a first transmit signal, and modulating an initial phase of the first transmit signal to the optimized phase, wherein the optimized phase is different from an initial phase of an interference signal;
transmitting the first transmit signal obtained after phase modulation;
receiving an echo signal of the first transmit signal obtained after phase modulation, wherein the echo signal comprises the interference signal; and
filtering the echo signal based on the first transmit signal obtained after phase modulation.

2. The method according to claim 1, wherein the determining an optimized phase of a first transmit signal specifically comprises:
determining a quantity M of transmit waveforms in the first transmit signal, wherein M≥1, and M is an integer; and
determining a group of optimized phases that one-to-one correspond to the M transmit waveforms; and
the modulating an initial phase of the first transmit signal to the optimized phase specifically comprises:
modulating an initial phase of each of the M transmit waveforms in the first transmit signal to a corresponding optimized phase.

3. The method according to claim 2, wherein the determining a group of optimized phases that one-to-one correspond to the M transmit waveforms comprises:
performing coherent accumulation on the filtered echo signal to obtain a range-Doppler response diagram;
determining, based on the range-Doppler response diagram, that there is a ghost target, and obtaining, along a slow time dimension, phase information in a distance unit in which the ghost target is located, wherein the phase information is denoted as a vector w_{I};
performing signal processing on the echo signal based on w_{I} to obtain an amplitude expression |W^{H}w_{I}|, wherein W is a discrete Fourier transform matrix, and (·)^{H} is a conjugate transpose operation of the matrix;
calculating a minimum value of the amplitude expression |W^{H}w_{I}|; and
determining, based on the minimum value, the group of optimized phases that one-to-one correspond to the M transmit waveforms.

4. The method according to claim 2, wherein the determining a group of optimized phases that one-to-one correspond to the M transmit waveforms comprises:
randomly generating a group of optimized phases that one-to-one correspond to the M transmit waveforms.

5. The method according to any one of claims 1 to 4, wherein the first transmit signal and the interference signal each are a continuous phase coded signal PMCW.

6. The method according to claim 5, wherein the first transmit signal and the interference signal have a same waveform and a same initial phase.

7. A detection apparatus, comprising:
a processing unit, configured to determine an optimized phase of a first transmit signal, and modulate an initial phase of the first transmit signal to the optimized phase, wherein the optimized phase is different from an initial phase of an interference signal;
a transceiver unit, configured to transmit the first transmit signal obtained after phase modulation;
the transceiver unit, further configured to receive an echo signal of the first transmit signal obtained after phase modulation, wherein the echo signal comprises the interference signal; and
the processing unit, further configured to filter the echo signal based on the first transmit signal obtained after phase modulation.

8. The apparatus according to claim 7, wherein determining the optimized phase of the first transmit signal, the processing unit is specifically configured to:
determine a quantity M of transmit waveforms in the first transmit signal, wherein M≥1, and M is an integer; and
determine a group of optimized phases that one-to-one correspond to the M transmit waveforms; and
modulating the initial phase of the first transmit signal to the optimized phase, and the processing unit is specifically configured to:
modulate an initial phase of each of the M transmit waveforms in the first transmit signal to a corresponding optimized phase.

9. The apparatus according to claim 8, wherein determining the group of optimized phases that one-to-one correspond to the M transmit waveforms, and the processing unit is specifically configured to:
perform coherent accumulation on the filtered echo signal to obtain a range-Doppler response diagram;
determine, based on the range-Doppler response diagram, that there is a ghost target, and obtaining, along a slow time dimension, phase information in a distance unit in which the ghost target is located, wherein the phase information is denoted as a vector w_{I};
perform signal processing on the echo signal based on w_{I} to obtain an amplitude expression |W^{H}w_{I}|, wherein W is a discrete Fourier transform matrix, and (·)^{H} is a conjugate transpose operation of the matrix;
calculate a minimum value of the amplitude expression |W^{H}w_{I}|; and
determine, based on the minimum value, the group of optimized phases that one-to-one correspond to the M transmit waveforms.

10. The apparatus according to claim 8, wherein determining the group of optimized phases that one-to-one correspond to the M transmit waveforms, and the processing unit is specifically configured to:
randomly generate a group of optimized phases that one-to-one correspond to the M transmit waveforms.

11. The apparatus according to any one of claims 7 to 10, wherein the first transmit signal and the interference signal each are a continuous phase coded signal PMCW.

12. The apparatus according to any one of claims 7 to 11, wherein the first transmit signal and the interference signal have a same waveform and a same initial phase.

13. A detection apparatus, comprising at least one processor, wherein the at least one processor is coupled to at least one memory, the at least one processor is configured to execute a computer program or instructions stored in the at least one memory, and the method according to any one of claims 1 to 6 is performed.

14. A computer-readable storage medium, wherein the computer-readable storage medium stores a computer program or instructions, and when the computer instructions are run on a computer, the method according to any one of claims 1 to 6 is performed.

15. A chip, comprising a processor and a communications interface, wherein
the communications interface is configured to receive a computer program or instructions, and transmit the computer program or the instructions to the processor, wherein the processor is configured to execute the computer program or the instructions, so that the method according to any one of claims 1 to 6 is implemented.
